# EUROPEAN PATENT APPLICATION

(11) **EP 0 357 850 A1**
(43) Date of publication of application: **14.03.1990**
(21) Application number: 88308271.1
(22) Date of filing: 07.09.1988
(51) Int. Cl.: C08F 20/30, C09K 19/38

(54) **Polymer composition, capable of forming a chiral nematic mesophase**

(71) Applicant: STAMICARBON B.V., NL-6167 AC Geleen (NL)
(72) Inventor: Cowie, Ian M.G., Stirling FK9 4LA Scotland (GB); Hunter, Hugh W.M., Stirling FK9 4LA Scotland (GB); Vriesema, Bindert Klaas, NL-6151 GE Sittard (NL)

(57) **Abstract**

The invention relates to novel polymer compositions based on thermotropic chiral polymers, capable of forming a chiral nematic mesophase, characterized by the fact that the compositions consist of monomers which have the chiral centre in the spacer part of the molecule, between the main chain and the mesogenic unit in the side chain. The compositions are conceivably useful as selective light reflectors, information storage device materials and coloured coatings. Furthermore they may be used in non-linear optics.

## Description

The invention relates to polymer compositions comprising a polymer capable of forming a chiral nematic mesophase, the said polymer consisting of a main and side chain, the said side chain comprising at least a mesogenic unit and a chiral atom.

Such a composition is known from EP-A-0184482. This patent describes polymer compositions based on a monomer according to formula (I): 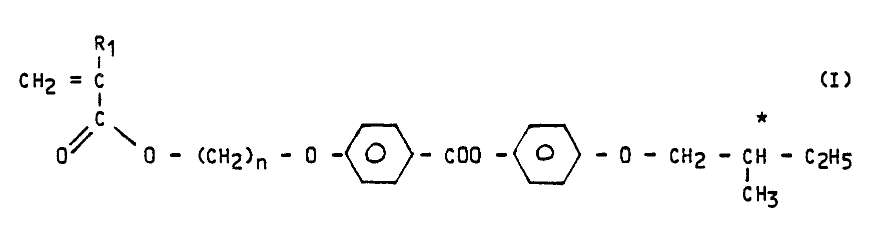 The C-atom which is marked is a chiral atom. This atom is present at the end of the side chain. The polymer obtained from the monomer of formula (I) may be used for non-linear optics, due to its liquid crystal properties. I.e. the polymer is highly orientated in the melt. The orientation is 'frozen' by cooling the polymer quickly beneath its glass transition temperature (Tg).

For some applications however, there may be a problem concerning the magnitude of the glass transition temperature, especially when the polymers have to be used at elevated temperatures.

Therefore there is a need for a polymer composition which exhibits a relatively high Tg.

It is the object of the invention to provide such polymer compositions.

The polymer composition according to the invention are characterized by the fact that the chiral C-atom is present in the 'spacer' part between the main and side chain, rather than on the chain end.

By 'spacer' part is meant a flexible unit which links the main chain to the side chain mesogenic unit.

Surprisingly it has been found that the polymer compositions according to the invention not only exhibit an increased Tg, but also that these compositions are easy to process. These compositions are also useful as coloured coatings, information storage device materials and as selective light reflectors.

The compositions according to the invention comprise at least a monomer with formula (II) 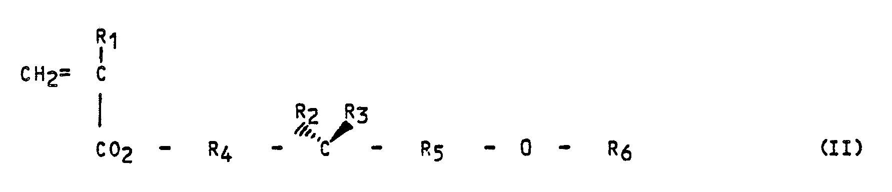 wherein
R₁ = hydrogen, alkyl with 1-3 C-atoms, or a halogen;
R₂ ≠ R₃;
R₂, R₃ = hydrogen, alkylgroup with 1-3 C-atoms, halogen, aryl-, alkylaryl-, or phenylgroup;
R₄ = (CH₂)ₙ-group, or (CH₂CH₂O)ₙ, wherein n = 0-10;
R₅ = (CH₂)ₙ-group, wherein n = 0-10;
R₆ = 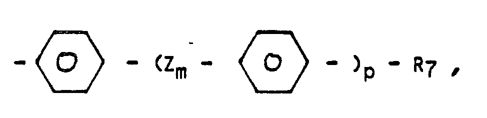 wherein
m = 0,1; p = 0, 1, 2, 3;
Z = -COO, -OCO-, -SO₂-, or - C(CH₃)₂-;
R₇ = - O - (CH₂)ₙ H;
- (CH₂)ₙ H;
- COO - (CH₂)ₙ H;
or a - CN group
where n = 0-4.

In the polymer composition according to the invention R₁, R₂ and R₃ are preferably a hydrogen or a methylgroup.

The polymer used in the composition according to the invention will be optically active, due to the chiral centre in the spacer part of the monomers.

The polymer used in the composition according to the invention is a chiral nematic liquid crystal polymer, capable of forming a chiral nematic mesophase. A chiral nematic liquid crystal polymer exhibits a twisted nematic phase in which the direction of the polymer side chain in a given region, is rotated through a fixed angle, thereby producing a supermolecular helical structure within the mesophase.

This configuration can account for exceptional biaxial modulus properties and allows the polymers to be used in forming sheets, films and coatings.

The invention is not limited to homopolymers made from the monomer of formula (II), but discloses also compositions wherein said monomers are used.

Compositions of polymers based on the monomers of formula (II) and a polymer based on monomers of formula (III) are especially preferred: 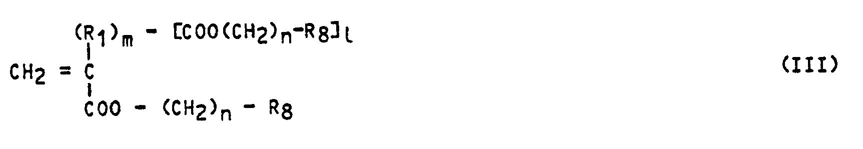 wherein
R₁ = hydrogen or an alkylgroup with 1-3 C-atoms or a halogen when l = 0; or a (CH₂)-group when l = 1;
n = 1-10;
m = 0,1 or 2;
l = 0,1 R₈ = 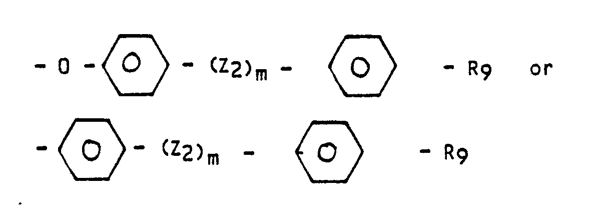 wherein
Z₂ = -COO-, -OCO-;
m = 0,1;
and R₉ = -O-(CH₂)_{q} H;
-(CH₂)_{q} H;
-COO-(CH₂)_{q} H;

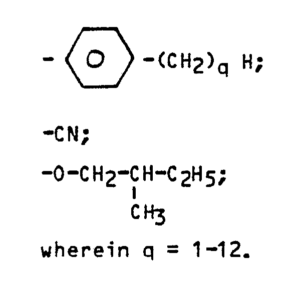

In this context it is noted that when properly chosen, some monomers according formula (III) are known from EP-A-0184482 and from DE-A-2722589.

The monomers to be used in the compositions according to the invention may be prepared in a manner which is known per se. For instance both EP-A-0184482 and DE-A-2722589 describes the preparation of the monomers. The preparation of the monomers is elucidated in the examples.

The copolymers described here are examples of thermotropic chiral copolymers which have the chiral centre in the 'spacer' part of the molecule. The copolymers exhibiting selective light reflection and, having only the chiral nematic structure, could conceivably be useful as selective light reflectors, information storage device materials and coloured coatings. In the copolymers where a terminal cyano group is present in either monomer, alignment in electric fields is possible, and this effect changes the wavelength of reflected light.

The invention will be elucidated on the basis of the following examples, without being restricted hereto.

### Examples

The following monomers were prepared: 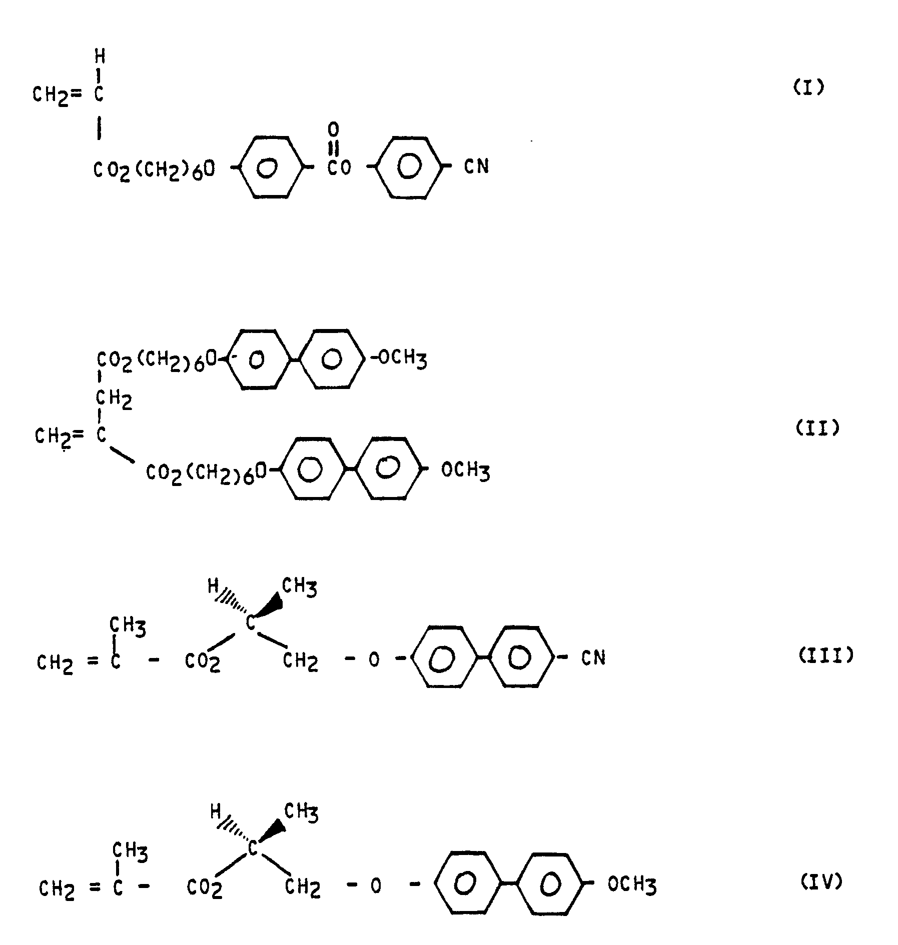 The preparation of these monomers is set out below.

### (I) Preparation of 4-cyanophenyl-4′-(6-acryloyloxyhexyloxy) benzoate(CPBA-6)

### (A) 4-(6-Hydroxyhexyloxy)benzoic acid

4-Hydroxybenzoic acid (25.5g, 0.185 mol) was dissolved in a mixture of ethanol (65ml), water (28ml), potassium hydroxide (27.7g, 0.49 mol) and a pinch of potassium iodide. 1-Chloro-6-hydroxy hexane (23 g, 0.168 mol) was then added slowly dropwise and the mixture refluxed for 20 hours. After cooling the mixture, the ethanol was evaporated in vacuo and the residue dissolved in water (200ml). This aqueous solution was washed with diethylether (3x50ml) then adjusted to pH2 with 2N HCL and the resultant precipitate collected by filtration. After washing with water and drying, the crude product was recrystallised from ethanol. YIELD= 21.6g, 54%; melting point= 139-142¤C.

### (B) 4-(6-Acryloyloxy hexyloxy)benzoic acid

4-(6-Hydroxyhexyloxy)benzoic acid (21.6g, 0.09 mol) was esterified azeotropically with freshly distilled acrylic acid (26g, 0.36 mol) as the catalyst and hydroquinone (2g, 0.018 mol) as the polymerisation inhibitor. Reflux was continued for 20 hours. On cooling, the reaction mixture was diluted with diethylether (1000ml) and washed carafully with warm water until no more acrylic acid was detected. The organic layer was dried (MgSO₄), evaporated and the crude product recrystallised from isopropanol. YIELD= 17.6g, 67% Melting point= cryst. 86¤C N, 90¤C I (N=nematic phase; I = isotropic phase).

### (C) 4-Cyanophenyl-4′-(6-acryloyloxyhexyloxy)benzoate

4-(6-Acryloyloxyhexyloxy)benzoic acid (17.3 g, 0.059 mol) was stirred with thionyl chloride (35.7 g, 0,3 mol) in the presence of DMF (2-drops) and 2,6-di-t-butyl-p-cresol (4.4g, 0.02 mol). After ca. 25 minutes, by which time solution was achieved, the excess thionyl chloride was removed by rotary evaporator. The acid chloride residue was dissolved in anhydrous chloroform (30ml) and added slowly dropwise into a stirred solution of 4-cyano phenol (7.03g, 0.059mol) and triethylamine (6.07g, 8.36ml, 0.06mol) in chloroform (20ml) at 0¤C. After the addition the mixture was stirred at room temperature for 24 hours then chloroform (200ml) was added.
This solution was washed with water (1x50ml) followed by 2N sodiumhydroxide solution (3x50ml) and water (2x50ml). The organic layer was dried (MgSO₄), evaporated, then subjected to flash chromatography using dichloromethane as the eluant. The ester was recrystallised from isopropanol and shown to be pure by t.l.c. YIELD = 16g, 69%; M.P.T.= 72-73¤C.
Chemical analysis, 'H NMR and I.R. analysis all correspond with expected data.

### (II) Preparation of Di[6-(4-methoxy-4′-oxybiphenyl)hexyl]-2-methylene butane-1,4-dioate (MBI-6)

### (A) 4-Methoxy-4′-hydroxybiphenyl

Biphenol (75g, 0.402 mol) was dissolved in 10% sodium hydroxide solution (0.804 mol equiv.) dimethyl sulphate (50g, 38ml, 0.402mol) was added and the mixture stirred mechanically for 30 minutes. The resultant precipitate was filtered, washed with 10% sodiumhydroxide solution and water. The precipitate was then dissolved in boiling water and filtered hot, the desired product finally being isolated by adding 2N H₂SO₄ carefully to the hot filtrate. The product was collected by filtration, washed with water, dried and recrystallised from ethanol. YIELD= 31.3g, 39%. M.P.T.: 183-185¤C.

### (B) 4-methoxy-4′-(6-hydroxyhexyloxy)biphenyl

4-Methoxy-4′-hydroxy biphenyl (30g, 0.15 mol) was dissolved in hot ethanol (200ml) and potassium hydroxide (9.26g, 0.165 mol) in water (45ml) added under stirring. 1-chloro-6-hydroxy hexane (22.5g, 0.165 mol) was added and the mixture refluxed for 24 hours. The solution was then diluted with an equal volume of water and the ethanol distilled off. The resultant precipitate was filtered and washed copiously with hot 10% potassium hydroxide solution, followed by water. The dried product was recrystallized from ethanol. YIELD= 30.6g, 68%; M.P.T. 130¤C.

### (C) Di[6-(4-methoxy-4′-oxybiphenyl)hexyl]-2-methylene butane-1,4-dioate

4-Methoxy-4′-(6-hydroxyhexyloxy) biphenyl (15.36g, 51 mmol) was esterified azeotropically with itaconic acid (2.21g, 17 mmol) in toluene (200ml) in the presence of p-toluene sulphonic acid (0.4g, 2mmol). Reflux was continued for 48 hours. Toluene (400ml) was added after this time, and the solution washed with 10% sodium bicarbonate solution (3x100ml) followed by water (100ml). The dried (MgSO₄) organic layer was evaporated and the crude product purified by column chromatography using silica gel (Fisons 60-120 mesh) and 5% ethyl acetate in chloroform as the eluant. YIELD = 10g, 85%; M.P.T.: cryst. 68¤C, S_{B}; 108¤C I.
Chemical analysis, 'H NMR and IR data correspond with expected values.

### III Preparation of (S)-1-(4-Cyano-4′-oxibiphenyl)-2-Methacryloyloxy Propane

### (A) Ethyl (S)-2-(tetrahydro-2-pyranoxy) propanoate.

Dihydro-2H-pyran (63g, 0.75 mol) followed by 12 N HCL (5 drops) were added to (S) ethyl lactate (53.1g, 0.45 mol) under stirring. Heat evolution was controlled by means of a water/ice bath. Stirring was continued for 20 hours after which time sodium bicarbonate (ca. 5g) was added. Stirring was continued for a further 2 hours then the solution was filtered and concentrated by rotary evaporation at 50¤C. The pure products (since the THP ring introduces a second chiral centre) were isolated by distillation through a short Vigreaux column YIELD: 76.3g, 84%; BPT.: 64-68¤C/0.03 mm Hg.

### (B) (S)-2-(Tetrahydro-2-pyranoxy)-1-propanol.

Lithium aluminium hydride (8.0g, 0.214 mol) was slurried in cold (0¤C) anhydrous diethylether (270ml) under nitrogen and a solution of ethyl-(S)-2-(tetrahydro-2-pyranoxy) propanoate (67g, 0.335 mol) in anhydrous diethyl ether (100ml), was added slowly over 2 hours. The ice-bath was removed after the addition and the mixture was gently refluxed for 48 hours. On cooling water (8ml); 20% sodium hydroxide solution (6ml) and water (13ml) were added successively in a dropwise manner. After standing overnight the ether was evaporated and the remaining mixture subjected to extraction with diethylether in a Sohxlet apparatus for 4 hours. Distillation of the alcohol after evaporation of the ether gave a major fraction as a liquid. YIELD= 53.5g, 65%; BPT.: 42-44¤C /0.1 mm Hg.

### (C) (S)-1-(p-Toluene sulphonoxy)-2-(tetrahydro-2-pyranoxy)propane

To a cold (0¤C) solution of (S)-2-(tetrahydro-2-pyranoxy)1-propanol (13.5g, 84 mmol) in dry pyridine (50ml) was added, in small portions over a period of 15 minutes, p-toluene sulphonylchloride (19.06g, 100mmol). Stirring was continued throughout the addition and overnight, whilst keeping the reaction mixture at 0¤C. The precipitated pyridine hydrochloride was filtered off, washed with diethylether (2x100ml) and the combined filtrate and washings concentrated. Pyridine (15ml) was added, followed by water (20ml) and the mixture stirred for 2 hours in a ice-bath. Diethylether (200ml), and water (100ml) were then added to the mixture after t.l.c. analysis showed no starting materials were present and the layers were separated. The organic layer was then washed with aqueous coppersulphate solution followed by water (1x100ml). The organic layer was dried (MgSO₄) and evaporated to reveal an oil with a slight pink colour which was shown to be pure by t.l.c. analysis. YIELD= 24.8g, 94%.

### (D) (S)-1-(4-Cyano-4′-oxybiphenyl)-2-(tetrahydro-2-pyranoxy) propane.

Sodium hydride (0.69g, 29 mmol) was slurried in DMF (15ml) under a flow of Nitrogen and a solution of 4-cyano-4′-hydroxy biphenyl (5.46g, 28mmol) in DMF (15ml) added slowly dropwise. The mixture was stirred for 45 minutes then a solution of (S)-1-(p-toluene sulphonoxy)-2-(tetrahydro-2-pyranoxy)propane (8g, 25 mmol) in DMF (10 ml) was added dropwise. After the addition the reaction temperature was raised to about 50¤C and the mixture was left to stir overnight. After this time the DMF was removed from the reaction mixture by co-evaporation with xylene in vacuo. Chloroform and water were then added and the separated organic layer washed with 20% potassium hydroxide solution (3x100ml) and water (100ml). The dried (MgSO₄) organic layer was concentrated and subjected to flash chromatography using chloroform as the eluant. YIELD= 7.58g, 90%. OIL, [α]_{D}²⁰ = -17.5¤ (CHCl₃).

### (E) (S)-1-(4-cyano-4′-oxybiphenyl)-2-hydroxypropane.

(S)-1-(4-cyano-4′1-oxybiphenyl)-2-tetrahydro-2-pyranoxy) propane (7g, 20.7 mmol) was dissolved in acidified ethanol (100ml). [prepared from ethanol (100ml) and 0.1 N HCL (1ml)] and refluxed for 15 minutes. T.l.c. analysis showed only product present, therefore the ethanol was evaporated off and chloroform (100ml), and water (100ml) added. The organic layer was washed further with water (2x100ml), dried (MgSO₄) and evaporated. YIELD= 4.97g, 95%, M.P.T.: 103-104¤C. [α]²⁰= +12.4¤ (CHCL₃).

### (F) (S)-1-(4-cyano-4′-oxybiphenyl)-2-methacryloyloxy propane.

Methacryloyl chloride (1.16g, 11mmol) was added dropwise to an ice-cooled, stirred solution of (S)-1-(4-cyano-4′-oxybiphenyl)-2-hydroxy-propane (2.78g, 11mmol) and triethylamine (1.3g, 13mmol) in anhydrous benzene (75ml). After the addition 2,6-di-t-butyl-p-methylphenol (0.2g) was added, the ice bath was removed and the solution stirred vigorously for 4 hours. Benzene (100ml) was added, the mixture was washed with water (100ml), 10% sodium hydroxide solution (2x100ml), water (100ml), dried (MgSO₄) then evaporated. The crude product was purified by flash chromatography using a petroleum ether (40/60)/ethylacetate mixture (6:1). YIELD= 3.3g, 94%; M.P.T. 58-60¤C; [α]_{D}²⁰ = -19.2¤ (CHCL₃). Elemental analysis, 'H NMR and IR data for the above series of compounds were consistent with expected values.

### IV (S)-1-(4-methoxy-4′-oxybiphenyl)-2-methacrylaloyloxy propane

was prepared in similar yields by similar methods as set out in (III).

### Copolymerisations

Copolymerisations were carried out in benzene solution in evacuated seal-off ampoules using α,α′-azobisisobutyronitrile (AIBN) as the initiator (0.5 mol%) and precipitations were carried out from either chloroform or dichloromethane solutions into cold diethyl ether, methanol or acetone depending on the system under study.

Copolymersations were generally stopped after ∼ 10% conversion was reached.

The samples were examined between glass-slides on the hot-stage of a polarising microscope. A typical sample preparation is as follows:- The sample was heated above Tₙ*-I then cooled slowly until the mesophase appeared (usually the characteristic texture appeared at about Tₙ*-I -10°C). This was allowed to develop for up to 24 hours then rapidly cooled to below Tg.

### Copolymers of I and III

Copolymers of I and III were found to produce chiral nematic structures over a wide range of feed values with the copolymers having feed ratios (I/III) 90/10, 85/15, 75/25 exhibiting selective light reflection in the visible region of the spectrum (See table 1). These colours can be retained by rapidly cooling the sample below Tg since the chiral nematic structure is unaffected.

**TABLE 1**

| Ex | % chiral component III in copolymer feed | Tg (◊C) | Tₙ*-I (◊C) | % conversion | colour of reflected light against dark background |
|---|---|---|---|---|---|
| A | 0 | 33 | 133 | 60 | -- |
| I | 10 | 44 | 111 | 8 | Pink/red |
| II | 15 | 52 | 112 | 8 | turquoise/blue |
| III | 25 | 44 | 105 | 4 | blue/violet |
| IV | 50 | 100 | 112 | 13 | -- |
| V | 75 | 97 | 119 | 5 | -- |
| VI | 100 | 105 | -- | 62 | -- |
| Tg= glass transition temperature | | | | | |
| T_{n*-I} = temperature, at which the chiral nematic phase will be transformed into an isotropic phase. | | | | | |
| Example A is a comparative example. | | | | | |

### Copolymers of II and III

The same procedure was followed as carried out above. Copolymers of II and II were also found to produce chiral nematic structures. The results are summarized in table 2.

**TABLE 2**

| Ex | % chiral component (III) in copolymer (% in feed in brackets) | Tg (◊C) | T_{crist-s} (◊C) | T_{s-I} (◊C) | Tₙ*-I (◊C) | % conversion | colour of reflected light against dark background |
|---|---|---|---|---|---|---|---|
| B | 0 | 64 | 125 | 150 | - | 40 | - |
| VII | 26 (10) | 81 | 131 | 148 | - | 10 | - |
| VIII | 47 (25) | 93 | 121 | 136 | - | 12 | - |
| IX | 62 (40) | 82 | - | - | 116 | 11 | pale blue |
| X | 76 (60) | 94 | - | - | 112 | 8 | - |
| XI | 85 (75) | 96 | - | - | - | 7 | - |
| XII | 100 | 105 | - | - | - | 62 | - |
| T_{cryst-s} = temperature at which the crystalline phase will be transformed into a smectic phase; | | | | | | | |
| T_{s-I} = temperature at which the smectic phase will be transformed into an isotropic phase; | | | | | | | |
| T_{n*-I} = temperature at which the chiral nematic phase will be transformed into an isotropic phase. | | | | | | | |

### Copolymers of I and IV

The same procedure was followed as carried out above. Copolymers of II and IV were also found to produce chiral nematic structures. The results are summarized in table 3.

**TABLE 3**

| Ex | % chiral component IV in copolymer | Tg (◊C) | Tcryst-s (◊C) | Ts-n* (Ts-I)^{a} (◊C) | Tn*-I (◊C) | % conversion | colour of reflected light against dark background |
|---|---|---|---|---|---|---|---|
| C | 0 | 64 | 125 | (150)^{a} | -- | 40 | -- |
| III | 32 (15) | 78 | 118 | 132 | 137 | 6 | -- |
| XIV | 63 (26) | 69 | -- | 108 | 117 | 10 | -- |
| XV | 73 (34) | 68 | -- | -- | 91 | 11 | blue |
| XVI | 83 (50) | 79 | -- | -- | 103 | 8 | violet/blue |
| XVII | 95 (75) | 97 | -- | -- | 114 | 8 | -- |
| XVIII | 100 | 105 | -- | -- | 120 | 69 | -- |

| | | | | | | | |
|---|---|---|---|---|---|---|---|
| a- The temperature in brackets refers to Ts-I rather than Ts-n* | | | | | | | |
| Tcryst-s= temperature at which the crystalline phase will be transformed into a smectic phase. | | | | | | | |
| Ts-n*= temperature at which the smectic phase will be transformed into a chiral nematic phase. | | | | | | | |
| Tn*-I= temperature at which the chiral nematic phase will be transfermed into an isotropic phase. | | | | | | | |
| Example C is a comparative example. | | | | | | | |

## Claims

1. Polymer composition comprising a polymer capable of forming a chiral nematic mesophase, the said polymer consisting of a main and a side chain, the said side chain comprising at least a mesogenic unit and a chiral atom, characterized in that the chiral atom is present in the 'spacer' part between the main chain and the mesogenic side group.

2. Polymer composition according to claim 1, characterized in that the polymer composition comprises at least a monomer as set out in formula (II) 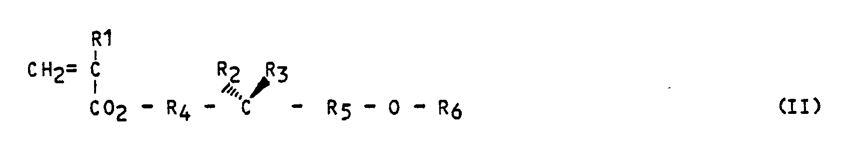 wherein
R₁= hydrogen, alkyl with 1-3 C-atoms, or a halogen;
R₂ ≠ R₃;
R₂, R₃= hydrogen, alkylgroup with 1-3 C-atoms, halogen, aryl-, alkylaryl-, or phenylgroup;
R₄= (CH₂)ₙ - group, or (CH₂CH₂O)ₙ, wherein n= 0-10;
R₅= (CH₂)ₙ-group, wherein n = 0-10;
R₆= 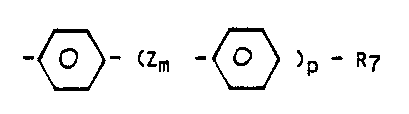 wherein m= 0,1; p= 0, 1, 2, 3;
Z= - COO - or - OCO - , - SO₂ -, or -C(CH₃)₂-;
R₇= - O-(CH₂)ₙ H;
-(CH₂)ₙ H;
- COO - (CH₂)ₙ H;
or a - CN group;
where n = 0-4.

3. Polymer composition according to claim 2, characterized in that R₁, R₂ or R₃ is a hydrogen or a methylgroup.

4. Polymer composition according to any one of the claims 2-3, characterized in that the composition comprises
A) 1-100 wt.% of a monomer according formula II
B) 99-0 wt.% of a monomer according formula III 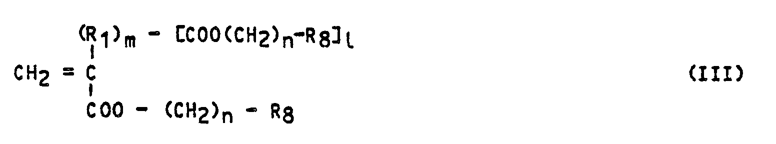 wherein
R₁ = hydrogen or an alkylgroup with 1-3 C-atoms or a halogen when l = 0; or a (CH₂)-group when l = 1;
n = 1-10;
m = 0,1 or 2;
l = 0,1;
R₈= 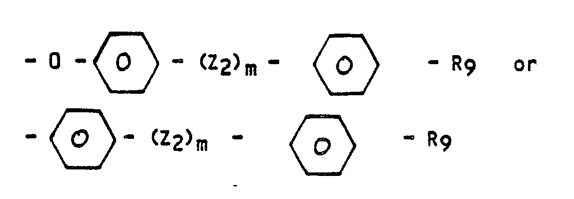 wherein Z₂= - COO - , - OCO - ;
m = 0,1;
and
R₉ = - O - (CH₂)_{q} H,
- (CH₂)_{q} H;
- COO - (CH₂)_{q} H;

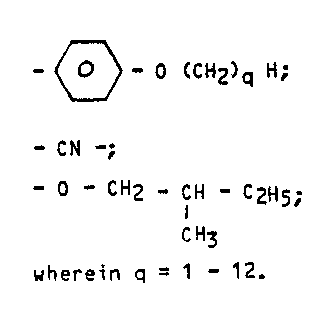

5. Polymer composition as described in any of the claims 1-4 for the use in non-linear optics.

6. Coloured coatings prepared from a polymer composition according to any one of the claims 1-4.

7. Information storage device material comprising a polymer composition according to any one of the claims 1-4.

8. Polymer composition substantially as described and elucidated with reference to the examples.

9. Object made wholly or partly of a polymer composition according to any one of claims 1-4.
